# EUROPÄISCHE PATENTSCHRIFT

(11) **EP 1 468 341 B1**
(45) Veröffentlichungstag und Bekanntmachung des Hinweises auf die Patenterteilung: **21.12.2005**
(21) Anmeldenummer: 03704216.5
(22) Anmeldetag: 16.01.2003
(51) Int. Cl.: G05D 1/02

(54) **VERFAHREN UND ANORDNUNG SOWIE COMPUTERPROGRAMM MIT PROGRAMMCODE-MITTELN UND COMPUTERPROGRAMM-PRODUKT ZUR PLANUNG VON JEWEILS AUS TEILBAHNEN ZUSAMMENGESETZTEN BAHNEN FÜR EINE MOBILE EINHEIT IN EINER GESAMTFLÄCHE**
METHOD AND ARRANGEMENT AND COMPUTER PROGRAM WITH MEANS FOR CODING A PROGRAM AND COMPUTER PROGRAM PRODUCT FOR PLANNING PATHS RESPECTIVELY CONTAINING PARTIAL PATHS FOR A MOBILE UNIT ON A COMPLETE SURFACE
PROCEDE, DISPOSITIF ET PROGRAMME INFORMATIQUE COMPRENANT DES MOYENS DE CODAGE DE PROGRAMMES ET PRODUIT PROGRAMME D'ORDINATEUR PERMETTANT DE PLANIFIER DES TRAJECTOIRES RESPECTIVEMENT CONSTITUEES DE PLUSIEURS TRAJECTOIRES PARTIELLES POUR UNE UNITE MOBILE SUR UNE SURFACE TOTALE

(30) Priorität: 25.01.2002 DE 10202919
(43) Veröffentlichungstag der Anmeldung: 20.10.2004
(73) Patentinhaber: SIEMENS AKTIENGESELLSCHAFT, 80333 München (DE)
(72) Erfinder: JÄGER, Markus, 80803 München (DE)
(86) Internationale Anmeldenummer: PCT/DE2003/000109
(87) Internationale Veröffentlichungsnummer: WO 2003/062936

(56) Entgegenhaltungen:
- W.H. HUANG: "Optimal Line-sweep-based Decompositions for Coverage Algorithms" PROCEEDINGS OF THE 2001 IEEE INTERNATIONAL CONFERENCE ON ROBOTICS AND AUTOMATION, 21. - 26. Mai 2001, XP002245725 Seoul, Korea
- E.U. ACAR ET AL.: "Complete sensor-based coverage with extented-range detectors: a hierarchical decomposition in terms of critical points and voronoi diagrams" PROCEEDINGS OF THE 2001 IEEE INTERNATIONAL CONFERENCE ON INTELLIGENT ROBOTS AND SYSTEMS, 29. Oktober 2001 (2001-10-29) - 3. November 2001 (2001-11-03), Seiten 1305-1311, XP002245724 Maui,Hawaii, USA
- A. ZELINSKY ET AL.: "A unified approach to planning, sensing and navigation for mobile robots" PREPRINTS OF THE THIRD INTERNATIONAL SYMPOSIUM ON EXPERIMENTAL ROBOTICS, 28. - 30. Oktober 1993, Seiten 1-8, XP002245726 Kyoto, Japan

## Beschreibung

Die Erfindung betrifft eine Planung von jeweils aus Teilbahnen zusammengesetzten Bahnen für eine mobile Einheit in einer Gesamtfläche.

Immer häufiger werden sich wiederholende Tätigkeiten Servicerobotern übertragen. Beispiele für solche Tätigkeiten sind Reinigungsaufgaben, Transportaufgaben, das Ausbringen von Saatgut auf entsprechende Flächen oder beispielsweise das Rasenmähen.

Zur Durchführung der jeweiligen Flächenbearbeitung sind an solchen Servicerobotern jeweils zugehörige Flächenbearbeitungsgeräte, wie eine Reinigungsvorrichtung oder eine Schneidvorrichtung, angebracht.

Dabei besteht das Problem, dass dieses Flächenbearbeitungsgerät möglichst die gesamte zu bearbeitende Fläche überstreichen soll, wobei möglich wenig Wege doppelt gefahren werden sollen.

Dieses setzt eine Planung einer geeigneten Bearbeitungsbahn voraus.

Dabei soll auch der Aufwand für die Planung dieser Bahn so gering sein, dass wenig Rechenkapazität dafür verwendet werden muß. Nur so kann ein akzeptables Zeitverhalten beim Planungsvorgang sichergestellt werden.

Des weiteren setzt ein Bahnplanungsverfahren im allgemeinen Kenntnis über die geometrischen Gegebenheiten der zu bearbeitenden Fläche voraus. Dazu zählen beispielsweise Informationen über Abmessungen der zu bearbeitenden Fläche und Lagen und Abmessungen darin vorhandener Hindernisse.

In der Regel werden digitale Karten verwendet, in welchen die jeweiligen geometrischen Gegebenheiten einer zu bearbeitenden Fläche gespeichert sind.

Eine solche digitale Karte kann bei entsprechendem Vorwissen vorab erstellt und in einem Serviceroboter gespeichert sein. In diesem Fall kann das Bahnplanungsverfahren bzw. die Bahnplanung vorab durchgeführt werden. Die abzufahrende Bahn ist bei Beginn der Flächenbearbeitung bekannt.

Auch kann eine digitale Karte erst während einer Flächenbearbeitung dynamisch erstellt werden. In diesem Fall erfolgt die Bahnplanung während der Flächenbearbeitung.

Erste, weiter verbreitete Verfahren zur flächendeckenden Bahnplanung waren template basiert und sind beispielsweise aus [2], [3], [4] bekannt. Bei solchen template basierten Bahnplanungsverfahren wird die Bahn nach einem fest vorgegebenen geometrischem Muster gebildet, beispielsweise mit lauter parallelen Geraden deren Enden durch Halbkreise verbunden sind. Der Nachteil dieser template basierten Bahnplanungsverfahren ist, dass sie sich nur für spezielle Umgebungen anwenden lassen und ansonsten sehr unflexibel sind.

Ein weiteres Bahnplanungsverfahren, welches aus [5] bekannt ist und einen anderen Ansatz aufweist, verwendet ein Potentialfeld, mit welchem eine zu bearbeitende Fläche überlagert und daraus eine Bearbeitungsbahn bestimmt wird. Die Bahn wird so gewählt, dass der Serviceroboter nach Möglichkeit Bahnen mit gleichem Potential abfährt und nur wenn dies nicht möglich ist zu einer Bahn mit niedrigerem Potential wechselt.

Weitere Bahnplanungsverfahren mit ähnlichem Ansatz sind aus [6] und [7] bekannt.

Ein aus [8] bekanntes, "planloses" Bahnplanungsverfahren verzichtet dagegen völlig auf die Festlegung bzw. Planung einer Bahn. Bei diesem Verfahren fährt ein Serviceroboter völlig zufällig umher. Die diesem Verfahren zugrunde liegende Annahme ist, dass nach genügend langer Zeit der gesamte Bereich mindestens einmal von dem Serviceroboter abgefahren und dabei eine zu bearbeitende Fläche komplett überstrichen ist. Der Vorteil dieses aus [8] bekannten Verfahrens liegt darin, dass es auch mit a priori unbekannten Umgebungen zurecht kommt.

Auch sind Bahnplanungsverfahren bekannt, welche eine Bahn in einer zunächst unbekannten Umgebung planen, indem sie das Abfahren der Bahn mit einer Explorationsstrategie kombinieren. Solche Bahnplanungsverfahren sind beispielsweise aus [9], [10] oder [11] bekannt.

Bei einem weiteren aus [12] bekannten Bahnplanungsverfahren werden kurze Bahnstücke parallel zu existierenden Hinderniskanten angelegt. Diese werden in einem zweiten Schritt zu einer gesamten Bahn, welche dann von einem Serviceroboter abzufahren ist, verbunden.

Nachteilig an diesem Bahnplanungsverfahren ist, dass bei diesem Verfahren die Bearbeitungsbahn vorab komplett geplant sein muss und diese dem Serviceroboter vor Beginn der Flächenbearbeitung vorliegen muss.

Somit liegt der Erfindung die Aufgabe zugrunde, ein Verfahren zur Planung einer Bahn für eine mobile Einheit anzugeben, welches eine Planung der Bahn auch online, d.h. während einer Bearbeitung einer zu bearbeitenden Fläche durch die mobile Einheit, ermöglicht.

Darüber hinaus liegt der Erfindung die Aufgabe zugrunde, ein Bahnplanungsverfahren anzugeben, dass möglichst effizient ist, d.h., dass möglichst eine gesamte zu bearbeitende Fläche durch eine Bahn abgedeckt wird, wobei möglich wenig Flächenteile der zu bearbeitenden Fläche doppelt bzw. mehrfach durch die Bahn überdeckt werden.

Des weiteren ist die Aufgabe der Erfindung, ein Bahnplanungsverfahren anzugeben, bei welchem ein Aufwand für die Planung gering ist, so dass wenig Rechenkapazität für die Planung verwendet werden muß.

Diese Aufgaben werden durch das Verfahren und die Anordnung sowie durch das Computerprogramm mit Programmcode-Mitteln und das Computerprogramm-Produkt zur Planung von jeweils aus Teilbahnen zusammengesetzten Bahnen für eine mobile Einheit in einer Gesamtfläche mit den Merkmalen gemäß dem jeweiligen unabhängigen Patentanspruch gelöst.

Bei dem Verfahren zur Planung von jeweils aus Teilbahnen zusammengesetzten Bahnen für eine mobile Einheit in einer Gesamtfläche, welche Gesamtfläche mindestens ein Hindernis aufweist und in mindestens zwei Teilflächen unterteilt ist, wobei die mindestens zwei Teilflächen jeweils einen Teil des mindestens einen Hindernisses aufweisen, werden zuerst die Teilbahnen in jeder der Teilflächen wie folgt geplant:
a) in der Teilfläche wird mindestens eine Begrenzungskante festgelegt, welche mindestens eine Begrenzungskante den Teil des Hindernisses in der Teilfläche begrenzt,
b) die Teilbahnen werden jeweils parallel mit einem vorgegebenen Abstand zu der mindestens einen Begrenzungskante in der Teilfläche angelegt.
Anschließend wird diejenige Teilbahn aus einer von den zwei Teilflächen mit derjenigen Teilbahn aus der anderen der zwei Teilflächen zu einer von den Bahnen zusammengefasst, welche Teilbahnen jeweils denselben vorgegebenen Abstand zu der jeweiligen Begrenzungskante in ihrer Teilfläche aufweisen.

Die Anordnung zur Planung von jeweils aus Teilbahnen zusammengesetzten Bahnen für eine mobile Einheit in einer Gesamtfläche, welche Gesamtfläche mindestens ein Hindernis aufweist und in mindestens zwei Teilflächen unterteilt ist, wobei die mindestens zwei Teilflächen jeweils einen Teil des mindestens einen Hindernisses aufweisen, weist eine Planungseinheit auf,
- bei der zuerst die Teilbahnen in jeder der Teilflächen wie folgt geplant werden:
   a) in der Teilfläche wird mindestens eine Begrenzungskante festgelegt, welche mindestens eine Begrenzungskante den Teil des Hindernisses in der Teilfläche begrenzt,
   b) die Teilbahnen werden jeweils parallel mit einem vorgegebenen Abstand zu der mindestens einen Begrenzungskante in der Teilfläche angelegt,
- und bei der anschließend diejenige Teilbahn aus einer von den zwei Teilflächen mit derjenigen Teilbahn aus der anderen der zwei Teilflächen zu einer von den Bahnen zusammengefasst wird, welche Teilbahnen jeweils denselben vorgegebenen Abstand zu der jeweiligen Begrenzungskante in ihrer Teilfläche aufweisen.

Anschaulich gesehen werden bei der Erfindung inkrementell (Teil-)Bahnen in Teilflächen einer Gesamtfläche parallel zu Hinderniskanten in der jeweiligen Teilfläche erzeugt. Zusammengehörige Teilbahnen verschiedener Teilflächen, d.h. Teilbahnen, welche sich auf dieselbe Hinderniskante bzw. auf das selbe Hindernis beziehen und von dieser bzw. von diesem jeweils entsprechende Abstände aufweisen, werden zu längeren Bahnen zusammengefasst. Diese längeren Bahnen werden von der mobilen Einheit abgefahren, um die zu bearbeitende Fläche zu überdecken.

Dabei bedeutet inkrementell, dass die Bahnplanung gemäß der Erfindung zuerst für ausgewählten Teilflächen einer Gesamtfläche durchgeführt wird, wobei die ausgewählten Teilflächen zuerst mit Teilbahnen zumindest zu Teil durchgeplant werden und anschließend Teilbahnen teilflächenübergreifend zu längeren Bahnen zusammengefasst werden.

Der erfinderische inkrementelle Ansatz macht es möglich, das Verfahren auch in einer für die mobile Einheit a priori unbekannten Umgebung einzusetzen.

Des weiteren führt der erfindungsgemäße inkrementelle Ansatz dazu, dass die Erfindung auch online einsetzbar ist, d.h. es muss nicht zu Beginn einer Flächenbearbeitung die Bahn komplett geplant und der mobilen Einheit übergeben werden, sondern die Bahn wird geplant während die mobile Einheit sie bereits abfährt.

Die Vorteile der Erfindung dabei sind, dass vorab keine Berechnungen nötig sind und die mobile Einheit flexibler und besser auf unvorhergesehene Ereignisse reagieren kann.

Das erfindungsgemäße Computerprogramm mit Programmcode-Mitteln ist eingerichtet, um alle Schritte gemäß dem erfindungsgemäßen Bahnplanungsverfahren durchzuführen, wenn das Programm auf einem Computer ausgeführt wird.

Das Computerprogramm-Produkt mit auf einem maschinenlesbaren Träger gespeicherten Programmcode-Mitteln ist eingerichtet, um alle Schritte gemäß dem erfindungsgemäßen Bahnplanungsverfahren durchzuführen, wenn das Programm auf einem Computer ausgeführt wird.

Die Anordnung sowie das Computerprogramm mit Programmcode-Mitteln, eingerichtet um alle Schritte gemäß dem erfinderischen Bahnplanungsverfahren durchzuführen, wenn das Programm auf einem Computer ausgeführt wird, sowie das Computerprogramm-Produkt mit auf einem maschinenlesbaren Träger gespeicherten Programmcode-Mitteln, eingerichtet um alle Schritte gemäß dem erfinderischen Verfahren durchzuführen, wenn das Programm auf einem Computer ausgeführt wird, sind insbesondere geeignet zur Durchführung des erfindungsgemäßen Verfahrens oder einer seiner nachfolgend erläuterten Weiterbildungen.

Bevorzugte Weiterbildungen der Erfindung ergeben sich aus den abhängigen Ansprüchen.

Die im weiteren beschriebenen Weiterbildungen beziehen sich sowohl auf die Verfahren als auch auf die Anordnung.

Die Erfindung und die im weiteren beschriebenen Weiterbildungen können sowohl in Software als auch in Hardware, beispielsweise unter Verwendung einer speziellen elektrischen Schaltung, realisiert werden.

Ferner ist eine Realisierung der Erfindung oder einer im weiteren beschriebenen Weiterbildung möglich durch ein computerlesbares Speichermedium, auf welchem das Computerprogramm mit Programmcode-Mitteln gespeichert ist, welches die Erfindung oder Weiterbildung ausführt.

Auch kann die Erfindung oder jede im weiteren beschriebene Weiterbildung durch ein Computerprogrammerzeugnis realisiert sein, welches ein Speichermedium aufweist, auf welchem das Computerprogramm mit Programmcode-Mitteln gespeichert ist, welches die Erfindung oder Weiterbildung ausführt.

In einer Weiterbildung werden zuerst alle Teilbahnen in einer Teilfläche geplant, bevor anschließend die Teilbahnen teilflächenübergreifend zu den Bahnen zusammengefasst werden.

Die Gesamtfläche kann dabei in mehrere Teilflächen unterteilt werden, wobei die Teilflächen ein zusammenhängendes Gebiet innerhalb der Gesamtfläche beschreiben. Auch kann die Gesamtfläche mehrere Hindernisse aufweisen, wobei jedes Hindernis zumindest in zwei von den Teilflächen liegt.

In einer weiteren Ausgestaltung werden in einer Teilfläche mehrere Begrenzungskanten festgelegt, deren jede den Teil des mindestens einen Hindernisses in der Teilfläche oder einen Teil eines Hindernisses in der Teilfläche begrenzt.

Um einen möglich geradlinigen Bahnverlauf zu erreichen, ist es zweckmäßig, diejenigen Teilbahnen aus jeweils verschiedenen Teilflächen zu einer von den Bahnen zusammenzufassen, welche denselben vorgegebenen Abstand zu der jeweiligen Begrenzungskante in ihrer Teilfläche aufweisen. Dadurch werden lange, teilflächenübergreifende kantenparallele Bahnen erzeugt.

Solche teilflächenübergreifende Bahnen können selbst wieder mittels Verbindungen, welche jeweils zwei Teilbahnen miteinander verbindet, zu einer Gesamtbahn verbunden werden. Dazu können Methoden einer Graphentheorie verwendet werden, um solche Verbindungen zu bestimmen.

Eine besonders effiziente Form einer inkrementellen Bahnplanung wird erreicht, wenn während einer Fahrt der mobilen Einheit in der Gesamtfläche die Bahnen für solche Teilflächen der Gesamtfläche geplant werden, welche Teilflächen höchstens einen vorgebbaren Abstand zu der mobilen Einheit aufweisen. Eine solche dynamische Bahnplanung spart Rechenzeit und Rechenkapazität.

Auch ist es möglich, das Bahnplanungsverfahren unter Verwendung einer digitalen Karte durchzuführen, welche die Gesamtfläche und/oder das mindestens eine Hindernis beinhaltet. Dabei kann die digitale Karte fertig in der mobilen Einheit gespeichert sein oder erst während der Fahrt der mobilen Einheit fertiggestellt und in der mobilen Einheit gespeichert werden.

Das Bahnplanungsverfahren kann bei beliebigen Einsatzgebieten von mobilen Einheiten eingesetzt werden, beispielsweise bei Servicerobotern wie Reinigungsrobotern.

In Figuren ist ein Ausführungsbeispiel der Erfindung dargestellt, welches im weiteren näher erläutert wird.

Es zeigen
- Figur 1: eine Überlagerung einer zu bearbeitenden Fläche mit einem Gitter zur Unterteilung der zu bearbeitenden Fläche in Teilflächen;
- Figuren 2a und 2b: ausgeschnittene Teilflächen (Fig.2a) einer zu bearbeitenden Fläche mit entsprechenden Polygonen (Fig.2b) der ausgeschnittenen Teilflächen;
- Figuren 3a bis 3n: Erzeugung von Pfadstücken innerhalb eines Polygons;
- Figur 4: eine komplett mit Bahnstücken überlagerte zu bearbeitende Fläche;
- Figur 5: eine Skizze eines Reinigungsroboters mit einer Reinigungsvorrichtung und Aufnahmemitteln;
- Figur 6: ein Ablaufdiagramm, in dem Verfahrensschritte eines inkrementellen flächendeckenden Bahnplanungsverfahrens dargestellt sind.

Ausführungsbeispiel: Inkrementelle flächendeckende Bahnplanung durch einen Reinigungsroboter

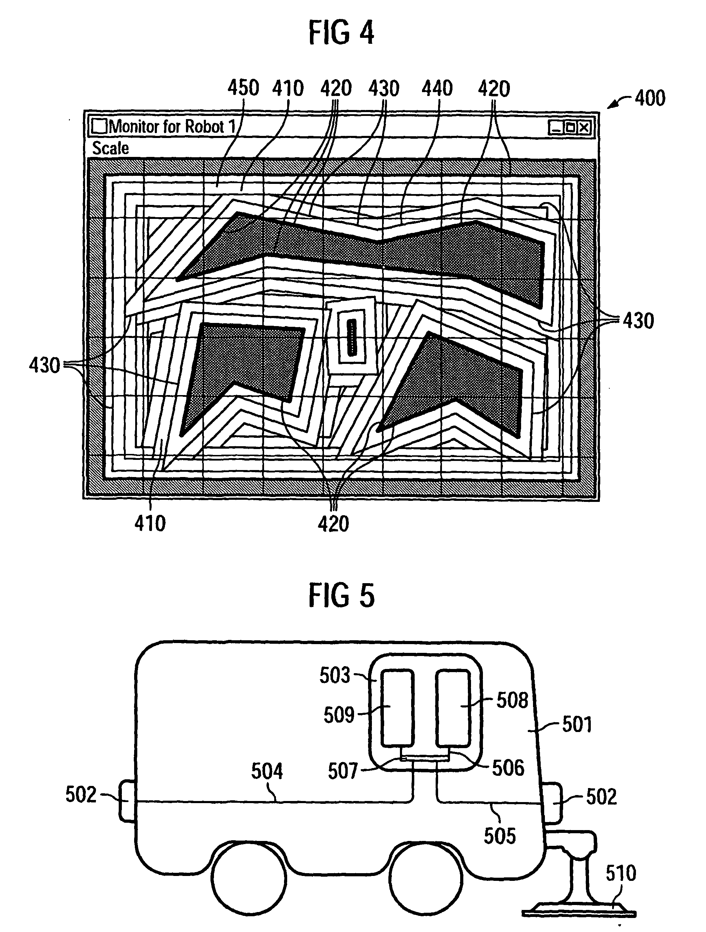

Fig.5 zeigt einen Reinigungsroboter 501 mit einer Reinigungsvorrichtung 510 und mehreren Laserscannern 502. Die Laserscanner 502 nehmen Bilder einer Umgebung des Reinigungsroboters 501 auf und führen die Bilder einer Recheneinheit 503 über Verbindungen 504, 505 zu. In der Recheneinheit 503 wird unter Verwendung der aufgenommenen Umgebungsbildern eine digitale Karte der Umgebung des Reinigungsroboters 501 aufgebaut.

Über eine Eingangs-/ Ausgangsschnittstelle 506, die über einen Bus 507 mit einem Speicher 508 sowie einem Prozessor 509 verbunden ist, werden die Bildsignale dem Speicher 508 zugeführt, in welchem auch die digitale Umgebungskarte gespeichert wird.

Das im weiteren beschriebene Verfahren wird in dem Prozessor 509 durchgeführt. Somit ist der Prozessor 509 derart eingerichtet, dass die im weiteren beschriebenen Verfahrensschritte eines inkrementellen flächendeckenden Bahnplanungsverfahren (kurz: das Verfahren) durchführbar sind.

### Verfahren zur inkrementellen flächendeckende Bahnplanung

Bei dem nachfolgend beschriebenen inkrementellen flächendeckenden Bahnplanungsverfahren (kurz: das Verfahren) handelt es sich um ein online Verfahren, d.h. es muss nicht zu Beginn die Bahn komplett geplant und dem Roboter übergeben werden, sondern die Bahn wird geplant während der Roboter sie bereits abfährt.

Die Vorteile dabei sind, dass vorab keine Berechnungen nötig sind, der Roboter besser auf unvorhergesehene Ereignisse reagieren kann und es dadurch auch für a priori unbekannte Umgebungen erweitert werden kann.

Bei dem Verfahren wird die zu bearbeitende Fläche 100 (kurz: der Raum) zunächst in mehrere Teilflächen 110, 210 mit Polygonen 120, 220 unterteilt (s. Aufteilung in Polygone).

Der Grund dafür liegt darin, dass die für die Bahnplanung in den einzelnen Polygonen nötigen Strukturen (s. Anlegen von Pfadstücken innerhalb eines Polygons) erst aufgebaut werden, wenn die bis dahin geplante Bahn tatsächlich durch das Polygon führt.

Die zur Bahnplanung nötigen Strukturen werden also inkrementell aufgebaut, und nicht komplett zu Beginn des Verfahrens, wie bei vorab beschriebenen bekannten Bahnplanungsverfahren.

Die Bahnplanung selbst (s. Bahnplanung) unterscheidet sich von den bisherigen bekannten Verfahren dadurch, dass sie weniger rechenintensiv ist.

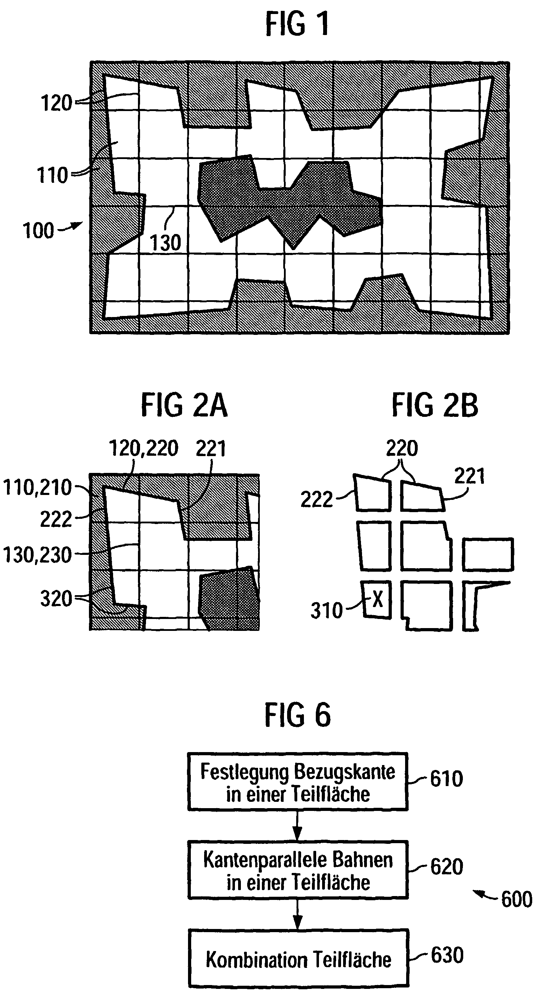

### Aufteilung in Polygone 120, 220 (Fig.1, Fig.2a und Fig.2b)

Die Unterteilung des Raumes 100 in mehrere Polygone 120, 220 erfolgt, indem der Raum 100 mit einem Gitter 130 überlagert und in mehrere Teilflächen 110, 210 unterteilt wird (Fig.1).

Daraus ergeben sich eine Menge von Polygone 120, 220, deren Kanten 221 entweder durch Kanten 222 des Raumes 100 oder durch Gitterlinien 130, 230 gebildet werden (Fig.2a und Fig.2b).

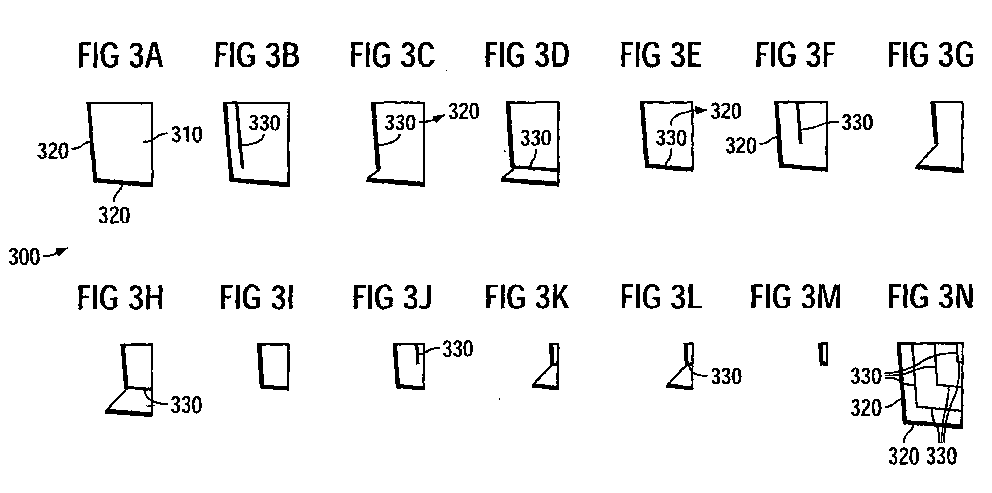

Anlegen von Pfadstücken innerhalb eines Polygons 310 (Fig.3a bis Fig.3n)

Um eine flächendeckende Bahn zu bestimmen, werden in den einzelnen Polygonen 120, 220 Bahnstücke 330 erzeugt.

Das hierbei verwendete Verfahren stellt sicher, dass die einzelnen Bahnstücke 330 eines Polygons 120, 220 genau einmal abgefahren werden müssen, um die gesamte Fläche des Polygons 120,220 abzudecken.

Wie die Bahnstücke 330 für ein beispielhaft ausgewähltes Polygon 310 erzeugt werden, ist in Fig. 3a bis Fig. 3n 300 dargestellt.

Die Grundidee (s. auch Fig.4) bei der Bahnerzeugung ist Bahnstücke 330 parallel zu Hinderniskanten 320 anzulegen und den, durch diese Bahn abgedeckten, Bereich von dem Polygon 310 abzuschneiden.

Fig.3a zeigt das mit einem X markierte Polygon 310 aus Fig.2b, wobei die beiden dicken Striche die Hinderniskanten 320 darstellen (s. Fig.2a).

Das erste zu einer Hinderniskante 320 parallel erzeugte Bahnstück 330 ist in Fig.3b zu sehen.

Der Abstand des Bahnstücks 330 zum Hindernis ist durch den minimalen Abstand das Roboters vom Hindernis 320 definiert. Die Länge des Bahnstücks ist durch Polygongrenzen, die ursprüngliche Länge der Hinderniskante 320 und eventuelle Verlängerungen oder Verkürzungen, abhängig vom Schnittwinkel der Hinderniskante 320 mit anderen Hinderniskanten 320, festgelegt.

Das durch das neue Bahnstück 330 beschnittene Polygon ist in Fig.3c zu sehen.

Hierbei ist das neu entstandene Bahnstück 330 als neue virtuelle Hinderniskante 320 dargestellt.

Die Fig. 3d und Fig.3e zeigen den gleichen Vorgang für die anderen Hinderniskanten 320. In Fig.3f ist zu sehen, wie ein neues Pfadstück 330 parallel zu einer virtuellen Hinderniskante 320 angelegt wird.

Der Vorgang ist genauso wie für eine normale Hinderniskante 320, abgesehen davon, dass der Bahnabstand nicht durch den minimalen Abstand des Roboter vom Hindernis bestimmt wird, sondern von dem angestrebten Abstand paralleler Bahnen, also der Spurbreite des Roboters.

Das Verfahren wird so lange fortgeführt, bis es nicht mehr möglich ist, parallele Bahnstücke 330 ein dem Polygon 310 anzulegen, dargestellt in den Fig.3g bis Fig.3m.

Das Polygon 310 mit allen, parallel zu Hinderniskanten 320 entstandenen Bahnstücken 330 zum Abschluss noch in Fig.3n dargestellt.

Grundlegend dabei ist, dass die Bahnstücke der einzelnen Polygone je nach Bedarf erzeugt werden können.

Wenn für zwei benachbarte Polygone die Bahnstücke 430 erzeugt wurden, so werden die Bahnstücke 430 der Polygone, welche durch die gleiche Hinderniskante 420 erzeugt wurden, zu längeren Bahnstücken 440 verbunden (Fig.4, 400 bis 440), da dies die Bahnplanung vereinfacht.

Wenn ein Polygon keine eigenen Hinderniskanten enthält, so werden einfach die Hinderniskanten der Nachbarpolygone verwendet. Es ist ohnehin sinnvoll immer auch die Hinderniskante der Nachbarpolygone mit hinzuzuziehen um längere Bahnstücke bilden zu können.

Fig.4 zeigt einen Raum 400 (mit den Teilflächen 450 und den jeweiligen Polygonen 410) der komplett mit Bahnstücken 430, 440 überlagert ist.

### Bahnplanung

Die Planung der Bahn erfolgt nach folgenden einfachen Regeln:
- Wenn ein Roboter sich gerade auf einem Bahnstück befindet, welches er noch nicht abgefahren hat, so fährt er es bis zum Ende entlang.
- Wenn ein Roboter sich nicht auf einem Bahnstück befindet das er noch nicht abgefahren hat, oder sich am Ende eines solchen befindet, so fährt er zum Anfang des nächstgelegen Bahnstücks, welches er noch nicht abgefahren hat.
- Die oben beschriebene Punkte werden so lange ausgeführt bis alle Bahnstücke einmal abgefahren sind.

Zum Auffinden eines neuen Bahnstückanfangs werden die gesamten Bahnstücke in einem Graphen organisiert. Der Aufbau des Graphen ist ähnlich zu dem Bahnplanungsverfahren aus [12].

Die Suche eines kürzesten Weges in einem Graphen von einem bestimmten Knoten (der aktuellen Position des Roboter) zu einem anderen bestimmten Knoten, bzw. einem Knoten mit bestimmten Eigenschaften (Anfang eines noch nicht befahrenen Bahnstücks), ist ein in der Graphentheorie bekanntes Problem. Bekannte Lösungen dafür sind in [13] beschrieben.

### Verfahren für a priori unbekannte Umgebungen

Um das Verfahren für a priori unbekannte Umgebungen zu erweitern sind folgende Modifikationen nötig:
- Die Bahnplanung, also das Abfahren der Bahnstücke, muss mit einer Explorationsstrategie kombiniert werden.
- Die einzelnen Polygone können nicht mehr durch die Überlagerung einer Karte mit einem Gitter erzeugt werden, sondern müssen aufgrund der Sensorinformationen des Roboters bestimmt werden. Das Verfahren kann so ablaufen, dass der Roboter immer nachdem er ein neues Teilgebiet exploriert hat, dieses in ein oder mehrere Polygone unterteilt.
- Eine weitere Modifikation ist, dass die Bahnstücke eventuell nicht mehr sofort erzeugt werden können wenn es für die Bahnplanung sinnvoll wäre, sondern eventuell erst später wenn die Polygone bekannt sind.

In diesem Dokument sind folgende Schriften zitiert:
[1] H. Endres, W. Feiten, and G. Lawitzky, Field Test of a Navigation System: Autonomous Cleaning in Supermarkets, International Conference on Robotics and Automation (ICRA), pp. 1779--1781, 1998.
[2] C. Hofner and G. Schmidt, Path Planning And Guidance Techniques For An Autonomous Mobile Cleaning Robot, International Conference on Intelligent Robots and Systems (IROS), pp. 610-617, 1994.
[3] R. Neumann de Carvalho, H.A. Vidal, P. Vieira, and M.I. Ribeiro, Complete Coverage Path Planning and Guidance for Cleaning Robots, IEEE International Symposium on Industrial Electronics, pp. 677-682, 1997.
[4] H. Choset and P. Pignon, Coverage Path Planning: The Boustrophedon Cellular Decomposition, International Conference on Field and Service Robotics, 1997.
[5] A. Zelinsky, R. A. Jarvis, J. C. Byarne and S. Yuta, Planning Paths of Complete Coverage of an Unstructered Environment by a Mobile Robot, International Conference on Robotica and Automation (ICRA), pp. 533-538, 1993.
[6] E. Prassler, D. Schwammkrug, B. Rohrmoser, and G. Schmidl, Autonomous Road Sweeping of Large Public Areas, Robotik 2000, VDI Berichte 1552, VDI Verlag GmbH, Düsseldorf, 2000.
[7] E. Prassler, D. Schwammkrug, B. Rohrmoser, and G. Schmidl, A Robotic Road Sweeper, International Conference on Robotica and Automation (ICRA), pp. 2364-2369, 2000.
[8] Aus einer Pressemitteilung der Firma Electrolux zur Vorstellung eines autonomen Bodenreinigungsroboters, http://www.electrolux.se/robot, Dezember 1997.
[9] D. Heinrich and R. Graf, Flächendeckende Bahnplanung in vollständig, teilweise oder nicht bekannten Umgebungen, Autonome Mobile Systeme (AMS), pp. 188-197, Karlsruhe, Germany, 1998.
[10] M. Kasper, D. Müller, and E. von Puttkamer, Ein verhaltensorientierter Ansatz zum flächendeckenden Fahren in a priori unbekannter Umgebung, Autonome Mobile Systeme (AMS), pp. 180-187, Karlsruhe, Germany, 1998.
[11] Frank Peters, Michael Kasper, Mirko Essling, and Ewald von Puttkammer, Flächendeckendes Explorieren und Navigieren in a priori unbekannter Umgebung mit low-cost Robotern, Autonome Mobile Systeme (AMS), pp. 157-164, 2000.
[12] Unveröffentlichte Deutsche Patentanmeldung mit dem amtlichen Aktenzeichen 1997e6999, 2001.
[13] D. Jungnickel, Graphen, Netzwerke und Algorithmen, BI Wissenschaftsverlag, Mannheim, 1990.

## Patentansprüche

1. Verfahren zur Planung von jeweils aus Teilbahnen zusammengesetzten Bahnen für eine mobile Einheit in einer Gesamtfläche, welche Gesamtfläche mindestens ein Hindernis aufweist und in mindestens zwei Teilflächen unterteilt ist, wobei die mindestens zwei Teilflächen jeweils einen Teil des mindestens einen Hindernisses aufweisen,
- bei dem zuerst die Teilbahnen in jeder der Teilflächen wie folgt geplant werden:
a) in der Teilfläche wird mindestens eine Begrenzungskante festgelegt, welche mindestens eine Begrenzungskante den Teil des Hindernisses in der Teilfläche begrenzt,
b) die Teilbahnen werden jeweils parallel mit einem vorgegebenen Abstand zu der mindestens einen Begrenzungskante in der Teilfläche angelegt,
- und bei dem anschließend diejenige Teilbahn aus einer von den zwei Teilflächen mit derjenigen Teilbahn aus der anderen der zwei Teilflächen zu einer von den Bahnen zusammengefasst wird, welche Teilbahnen jeweils denselben vorgegebenen Abstand zu der jeweiligen Begrenzungskante in ihrer Teilfläche aufweisen.

2. Verfahren nach Anspruch 1,
bei dem zuerst alle Teilbahnen in einer Teilfläche geplant werden bevor anschließend die Teilbahnen zu den Bahnen zusammengefasst werden.

3. Verfahren nach einem der vorangehenden Ansprüche,
bei dem die Gesamtfläche in mehrere Teilflächen unterteilt ist, wobei die Teilflächen ein zusammenhängendes Gebiet innerhalb der Gesamtfläche beschreiben, und/oder die Gesamtfläche mehrere Hindernisse aufweist, wobei jedes Hindernis zumindest in zwei von den Teilflächen liegt.

4. Verfahren nach einem der vorangehenden Ansprüche,
bei dem in der Teilfläche mehrere Begrenzungskanten, deren jede den Teil des mindestens einen Hindernisses in der Teilfläche oder einen Teil eines Hindernisses in der Teilfläche begrenzt, festgelegt werden.

5. Verfahren nach einem der vorangehenden Ansprüche,
bei dem mehrere Teilbahnen aus jeweils verschiedenen Teilflächen zu einer von den Bahnen zusammengefasst werden, wobei jede Teilbahn denselben vorgegebenen Abstand zu der jeweiligen Begrenzungskante in ihrer Teilfläche aufweist.

6. Verfahren nach einem der vorangehenden Ansprüche,
bei dem die Bahnen mittels Verbindungen, welche jeweils zwei der Bahnen miteinander verbinden, zu einer Gesamtbahn verbunden werden.

7. Verfahren nach dem vorangehenden Anspruch,
bei dem die Verbindungen unter Verwendung einer Graphentheorie ermittelt werden.

8. Verfahren nach einem der vorangehenden Ansprüche,
inkrementell durchgeführt während einer Fahrt der mobilen Einheit in der Gesamtfläche, wobei die Bahnen für solche Teilflächen der Gesamtfläche geplant werden, welche höchstens einen vorgebbaren Abstand zu der mobilen Einheit aufweisen.

9. Verfahren nach einem der vorangehenden Ansprüche,
durchgeführt unter Verwendung einer digitalen Karte, welche die Gesamtfläche und/oder das mindestens eine Hindernis beinhaltet.

10. Verfahren nach dem vorangehenden Anspruch,
bei dem die digitale Karte in der mobilen Einheit gespeichert wird.

11. Verfahren nach einem der vorangehenden Ansprüche,
bei dem die mobile Einheit ein Serviceroboter, insbesondere ein Reinigungsroboter, ist.

12. Anordnung zur Planung von jeweils aus Teilbahnen zusammengesetzten Bahnen für eine mobile Einheit in einer Gesamtfläche, welche Gesamtfläche mindestens ein Hindernis aufweist und in mindestens zwei Teilflächen unterteilt ist, wobei die mindestens zwei Teilflächen jeweils einen Teil des mindestens einen Hindernisses aufweisen, mit einer Planungseinheit,
- bei der zuerst die Teilbahnen in jeder der Teilflächen wie folgt geplant werden:
a) in der Teilfläche wird mindestens eine Begrenzungskante festgelegt, welche mindestens eine Begrenzungskante den Teil des Hindernisses in der Teilfläche begrenzt,
b) die Teilbahnen werden jeweils parallel mit einem vorgegebenen Abstand zu der mindestens einen Begrenzungskante in der Teilfläche angelegt,
- und bei der anschließend diejenige Teilbahn aus einer von den zwei Teilflächen mit derjenigen Teilbahn aus der anderen der zwei Teilflächen zu einer von den Bahnen zusammengefasst wird, welche Teilbahnen jeweils denselben vorgegebenen Abstand zu der jeweiligen Begrenzungskante in ihrer Teilfläche aufweisen.

13. Computerprogramm-Erzeugnis, das ein computerlesbares Speichermedium umfasst, auf dem ein Programm gespeichert ist, das es einem Computer ermöglicht, nachdem es in einen Speicher des Computers geladen worden ist, folgende Schritte durchzuführen zur Planung von jeweils aus Teilbahnen zusammengesetzten Bahnen für eine mobile Einheit in einer Gesamtfläche, welche Gesamtfläche mindestens ein Hindernis aufweist und in mindestens zwei Teilflächen unterteilt ist, wobei die mindestens zwei Teilflächen jeweils einen Teil des mindestens einen Hindernisses aufweisen:
- zuerst werden die Teilbahnen in jeder der Teilflächen wie folgt geplant:
a) in der Teilfläche wird mindestens eine Begrenzungskante festgelegt, welche mindestens eine Begrenzungskante den Teil des Hindernisses in der Teilfläche begrenzt,
b) die Teilbahnen werden jeweils parallel mit einem vorgegebenen Abstand zu der mindestens einen Begrenzungskante in der Teilfläche angelegt,
- und anschließend wird diejenige Teilbahn aus einer von den zwei Teilflächen mit derjenigen Teilbahn aus der anderen der zwei Teilflächen zu einer von den Bahnen zusammengefasst, welche Teilbahnen jeweils denselben vorgegebenen Abstand zu der jeweiligen Begrenzungskante in ihrer Teilfläche aufweisen.

14. Computerlesbares Speichermedium, auf dem ein Programm gespeichert ist, das es einem Computer ermöglicht, nachdem es in einen Speicher des Computers geladen worden ist, folgende Schritte durchzuführen zur Planung von jeweils aus Teilbahnen zusammengesetzten Bahnen für eine mobile Einheit in einer Gesamtfläche, welche Gesamtfläche mindestens ein Hindernis aufweist und in mindestens zwei Teilflächen unterteilt ist, wobei die mindestens zwei Teilflächen jeweils einen Teil des mindestens einen Hindernisses aufweisen:
- zuerst werden die Teilbahnen in jeder der Teilflächen wie folgt geplant:
a) in der Teilfläche wird mindestens eine Begrenzungskante festgelegt, welche mindestens eine Begrenzungskante den Teil des Hindernisses in der Teilfläche begrenzt,
b) die Teilbahnen werden jeweils parallel mit einem vorgegebenen Abstand zu der mindestens einen Begrenzungskante in der Teilfläche angelegt,
- und anschließend wird diejenige Teilbahn aus einer von den zwei Teilflächen mit derjenigen Teilbahn aus der anderen der zwei Teilflächen zu einer von den Bahnen zusammengefasst, welche Teilbahnen jeweils denselben vorgegebenen Abstand zu der jeweiligen Begrenzungskante in ihrer Teilfläche aufweisen.

15. Computerprogramm mit Programmcode-Mitteln, um alle Schritte gemäß Anspruch 1 durchzuführen, wenn das Programm auf einem Computer ausgeführt wird.

16. Computerprogramm mit Programmcode-Mitteln gemäß Anspruch 15, die auf einem computerlesbaren Datenträger gespeichert sind.

17. Computerprogramm-Produkt mit auf einem maschinenlesbaren Träger gespeicherten Programmcode-Mitteln, um alle Schritte gemäß Anspruch 1 durchzuführen, wenn das Programm auf einem Computer ausgeführt wird.

## Claims

1. Method for planning paths consisting respectively of partial paths for a mobile unit in an overall area, said complete area which has at least one obstacle and is subdivided into at least two partial areas, in which at least two partial areas respectively show one part of at least one obstacle,
- in which the partial paths are at first planned as follows in each of the partial areas:
a) at least one limiting side is specified in the partial area, of which at least one limiting side borders on the part of the obstacle in the partial area,
b) the partial paths are in each case created parallel at a prescribed distance from at least one limiting side in the partial area,
- and in which subsequently the one partial path from one of the two partial areas is combined with the other partial path from the other two partial areas into one of the paths, said partial paths in each case having the same prescribed distance from the specific limiting side in its partial area.

2. Method in accordance with claim 1,
in which all the partial paths are first planned in one partial area before the partial paths are subsequently combined into paths that cover all the partial areas.

3. Method in accordance with one of the previous claims,
in which the complete area is subdivided into a plurality of partial areas. with the partial areas describing a coherent region within the complete area and/or the complete area having a plurality of obstacles, in which case each obstacle lies in at least two of the partial areas.

4. Method in accordance with one of the previous claims,
in which a plurality of limiting sides are specified in one partial area, each of which limits the part of at least one obstacle in the partial area or one part of an obstacle in the partial area.

5. Method in accordance with one of the previous claims,
in which a plurality of partial paths is combined into one of the paths from different partial areas in each case, in which each partial path in each case is at the same prescribed distance from the specific limiting side in its partial area.

6. Method in accordance with one of the previous claims,
in which the paths are connected by means of connections, which in each case connect two of the partial paths with each other, into one complete path.

7. Method in accordance with the previous claim,
in which a graph theory can be used to determine the connections.

8. Method in accordance with one of the previous claims,
carried out in increments while a mobile unit is travelling in an overall area, in which the paths for such partial areas of the complete area are planned, these partial areas being at the most at a prescribed distance from the mobile unit.

9. Method in accordance with one of the previous claims,
carried out by using a digital map, which comprises the complete area and/or at least one obstacle.

10. Method in accordance with the previous claim,
in which the digital map is stored in the mobile unit.

11. Method in accordance with one of the previous claims,
in which the mobile unit is a service robot, in particular a cleaning robot.

12. Arrangement for planning paths consisting respectively of partial paths for a mobile unit in an overall area, said complete area which has at least one obstacle and is subdivided into at least two partial areas, in which at least two partial areas respectively show one part of at least one obstacle, with a planning unit,
- in which the partial paths are at first planned as follows in each of the partial areas:
a) at least one limiting side is specified in the partial area, of which at least one limiting side borders on the part of the obstacle in the partial area,
b) the partial paths are in each case created parallel at a prescribed distance from at least one limiting side in the partial area,
- and in which subsequently the one partial path from one of the two partial areas is combined with the other partial path from the other two partial areas into one of the paths, said partial paths in each case having the same prescribed distance from the specific limiting side in its partial area.

13. Computer program product which includes a computer-readable storage medium, in which a computer program is stored, which makes it possible for a computer, after said computer program product has been loaded into the memory of the computer, to carry out the following steps for planning paths in each case consisting of partial paths for a mobile unit in an overall area, the complete area of which at least has one obstacle and is at least subdivided into two partial areas, in which case at least two partial areas in each case have one part of at least one obstacle:
- in which the partial paths are first planned as follows in each of the partial areas:
a) at least one limiting side is defined in the partial area, with said least one limiting side bordering on the part of the obstacle in the partial area,
b) the partial paths are in each case created parallel at a prescribed distance from at least one limiting side in the partial area,
- and in which subsequently the one partial path from one of the two partial areas is combined with the other partial path from the other two partial areas into one of the paths, said partial paths in each case having the same prescribed distance from the specific limiting side in its partial area.

14. Computer-readable storage medium in which a program is stored, which makes it possible for a computer, after said storage medium has been loaded into the memory of the computer, to carry out the following steps for planning paths in each case consisting of partial paths for a mobile unit in an overall area, the complete area of which at least has one obstacle and is at least subdivided into two partial areas, in which case at least two partial areas in each case have one part of at least one obstacle:
- in which the partial paths are at first planned as follows in each of the partial areas:
a) at least one limiting side is defined in the partial area, with said least one limiting side bordering on the part of the obstacle in the partial area,
b) the partial paths are in each case created parallel at a prescribed distance from at least one limiting side in the partial area,
- and in which subsequently the one partial path from one of the two partial areas is combined with the other partial path from the other two partial areas into one of the paths, said partial paths in each case having the same prescribed distance from the specific limiting side in its partial area.

15. Computer program with means for coding a program to carry out all the steps according to claim 1 if the program is run on a computer.

16. Computer program with means for coding a program according to claim 15, which are stored in a computer-readable data medium.

17. Computer program product with means for coding a program stored in a machine-readable data medium in order to carry out all the steps according to claim 1 if the program is run on a computer.

## Revendications

1. Procédé pour la planification de trajectoires constituées respectivement de trajectoires partielles pour une unité mobile dans une surface globale, laquelle surface globale présente au moins un obstacle et est subdivisée en au moins deux surfaces partielles, les au moins deux surfaces partielles présentant chacune une partie du au moins un obstacle,
- dans lequel d'abord les trajectoires partielles sont planifiées de la façon suivante dans chacune des surfaces partielles :
a) dans la surface partielle, on définit au moins une arête de délimitation, laquelle au moins une arête de délimitation délimite la partie de l'obstacle dans la surface partielle,
b) les trajectoires partielles sont mises en place respectivement parallèlement avec une distance prédéfinie à la au moins une arête de délimitation dans la surface partielle,
- et dans lequel ensuite la trajectoire partielle constituée d'une des deux surfaces partielles est regroupée avec la trajectoire partielle constituée de l'autre des surfaces partielles pour former l'une des trajectoires, lesquelles trajectoires partielles présentent à chaque fois la même distance prédéfinie à l'arête de délimitation concernée dans leur surface partielle.

2. Procédé selon la revendication 1,
dans lequel d'abord toutes les trajectoires partielles sont planifiées dans une surface partielle avant qu'ensuite les trajectoires partielles soient regroupées pour former les trajectoires.

3. Procédé selon l'une quelconque des revendications précédentes,
dans lequel la surface globale est divisée en plusieurs surfaces partielles, les surfaces partielles décrivant une zone cohérente à l'intérieur de la surface partielle, et/ou la surface globale présentant plusieurs obstacles, chaque obstacle se situant au moins dans deux des surfaces partielles.

4. Procédé selon l'une quelconque des revendications précédentes,
dans lequel dans la surface partielle, plusieurs arêtes de délimitation, dont chacune délimite la partie du au moins un obstacle dans la surface partielle ou une partie d'un obstacle dans la surface partielle, sont définies.

5. Procédé selon l'une quelconque des revendications précédentes,
dans lequel plusieurs trajectoires partielles constituées de respectivement différentes surfaces partielles sont regroupées pour former l'une des trajectoires, chaque trajectoire partielle présentant la même distance prédéfinie à l'arête de délimitation concernée dans sa surface partielle.

6. Procédé selon l'une quelconque des revendications précédentes,
dans lequel les trajectoires sont reliées au moyen de liaisons, qui relient respectivement deux des trajectoires entre elles, pour former une trajectoire globale.

7. Procédé selon la revendication précédente,
dans lequel les liaisons sont déterminées en utilisant une théorie de graphe.

8. Procédé selon l'une quelconque des revendications précédentes,
mis en oeuvre de façon incrémentielle pendant un déplacement de l'unité mobile dans la surface globale, les trajectoires étant planifiées pour de telles surfaces partielles de la surface globale, lesquelles présentent au maximum une distance prédéfinie à l'unité mobile.

9. Procédé selon l'une quelconque des revendications précédentes,
mis en oeuvre en utilisant une carte numérique qui contient la surface globale et/ou le au moins un obstacle.

10. Procédé selon la revendication précédente,
dans lequel la carte numérique est mémorisée dans l'unité mobile.

11. Procédé selon l'une quelconque des revendications précédentes,
dans lequel l'unité mobile est un robot de service, en particulier un robot de nettoyage.

12. Agencement pour la planification de trajectoires constituées respectivement de trajectoires partielles pour une unité mobile dans une surface globale, laquelle surface globale présente au moins un obstacle et est subdivisée en au moins deux surfaces partielles, les au moins deux surfaces partielles présentant au moins une partie du au moins un obstacle, avec une unité de planification,
- sur lequel d'abord les trajectoires partielles sont planifiées de la façon suivante dans chacune des surfaces partielles :
a) dans la surface partielle, on définit au moins une arête de délimitation, laquelle au moins une arête de délimitation délimite la partie de l'obstacle dans la surface partielle,
b) les trajectoires partielles sont mises en place respectivement parallèlement avec une distance prédéfinie à la au moins une arête de délimitation dans la surface partielle,
- et dans lequel ensuite la trajectoire partielle constituée de l'une des deux surfaces partielles est regroupée avec la trajectoire partielle constituée de l'autre des deux surfaces partielles pour former une des trajectoires, lesquelles trajectoires partielles présentent à chaque fois la même distance prédéfinie à l'arête de délimitation concernée dans leur surface partielle.

13. Produit de programme informatique, qui comprend un agent de mémorisation pouvant être lu sur ordinateur, sur lequel est mémorisé un programme qui permet à un ordinateur, une fois qu'il a été chargé dans une mémoire de l'ordinateur, de mettre en oeuvre les étapes suivantes pour la planification de trajectoires constituées respectivement de trajectoires partielles pour une unité mobile dans une surface globale, laquelle surface globale présente au moins un obstacle et est subdivisée en au moins deux surfaces partielles, les au moins deux surfaces partielles présentant chacune une partie du au moins un obstacle :
- on planifie d'abord les trajectoires partielles dans chacune des surfaces partielles de la façon suivante :
a) dans la surface partielle, on définit au moins une arête de délimitation, laquelle au moins une arête de délimitation délimite la partie de l'obstacle dans la surface partielle,
b) les trajectoires partielles sont mises en place respectivement parallèlement avec une distance prédéfinie à la au moins une arête de délimitation dans la surface partielle,
- et ensuite la trajectoire partielle constituée de l'une des deux surfaces partielles est regroupée avec la trajectoire partielle constituée de l'autre des deux surfaces partielles pour former l'une des trajectoires, lesquelles trajectoires partielles présentent chacune la même distance prédéfinie à l'arête de délimitation respective dans leur surface partielle.

14. Support de mémorisation pouvant être lu sur un ordinateur, sur lequel est mémorisé un programme qui permet à un ordinateur, une fois qu'il a été chargé dans une mémoire de l'ordinateur, de mettre en oeuvre les étapes suivantes pour la planification de trajectoires constituées respectivement de trajectoires partielles pour une unité mobile dans une surface globale, laquelle surface globale présente au moins un obstacle et est subdivisée en au moins deux surfaces partielles, les au moins deux surfaces partielles présentant chacune une partie du au moins un obstacle :
- on planifie d'abord les trajectoires partielles dans chacune des surfaces partielles de la façon suivante :
a) dans la surface partielle, on définit au moins une arête de délimitation, laquelle au moins une arête de délimitation délimite la partie de l'obstacle dans la surface partielle,
b) les trajectoires partielles sont mises en place respectivement parallèlement avec une distance prédéfinie à la au moins une arête de délimitation dans la surface partielle,
- et ensuite la trajectoire partielle constituée de l'une des deux surfaces partielles est regroupée avec la trajectoire partielle constituée de l'autre des surfaces partielles pour former l'une des trajectoires, lesquelles trajectoires partielles présentent chacune la même distance prédéfinie à l'arête de délimitation concernée dans leur surface partielle.

15. Programme informatique avec des moyens de codage de programme afin de mettre en oeuvre toutes les étapes selon la revendication 1 lorsque le programme est réalisé sur un ordinateur.

16. Programme informatique avec des moyens de programme de codage selon la revendication 15, qui sont mémorisés sur un support de données pouvant être lu sur un ordinateur.

17. Produit de programme informatique avec des moyens de codage de programme mémorisés sur un support pouvant être lu à la machine, afin de mettre en oeuvre toutes les étapes selon la revendication 1 lorsque le programme est réalisé sur un ordinateur.
